# EUROPEAN PATENT SPECIFICATION

(11) **EP 1 775 435 B1**
(45) Date of publication and mention of the grant of the patent: **13.06.2007**
(21) Application number: 06004499.7
(22) Date of filing: 06.03.2006
(51) Int. Cl.: F01N 3/28, B01D 53/94

(54) **Holding and sealing member and exhaust emission control device**
Fixierungs- und Dichtungselement und Vorrichtung zur Regelung der Abgasemissionen
Elément de fixation et d'étanchéité et dispositif de contrôle des émissions de gaz d'échappement

(30) Priority: 27.07.2005 JP 2005217927
(43) Date of publication of application: 18.04.2007
(73) Proprietor: IBIDEN CO., LTD., Ogaki-shi, Gifu 503-8604 (JP)
(72) Inventor: Agata, Masanao, Ogaki-Shi, Gifu 503-0021 (JP)
(74) Representative: HOFFMANN EITLE

(56) References cited:
- EP-A- 0 319 299
- EP-A- 1 296 030
- WO-A-20/05021945
- US-A- 4 617 176

## Description

### BACKGROUND OF THE INVENTION

### 1. Field of the Invention

The present invention relates to a holding and sealing member for use in an exhaust emission control device or the like, and an exhaust emission control device including the holding and sealing member.

### 2. Description of the Related Art

Along with a significant increase of the number of vehicles from the beginning of the 20th century, the amount of exhaust emissions from internal combustion engines from vehicles has been rapidly increasing. The exhaust emissions are beginning to have serious effects on the global environment because various substances contained in the exhaust emissions, especially from diesel engines, cause pollution.

Due to such circumstances, a variety of exhaust emission control devices have been developed and put into practical use. A typical exhaust emission control device includes a casing (metal shell) that is attached to an exhaust pipe connected to an exhaust gas manifold of an engine, and an exhaust gas treatment member with numerous tiny pores that is disposed inside the casing. Non-exclusive examples of the exhaust emission control device include catalytic carriers and diesel particulate filters (DPFs). With the above-described configuration, the DPFs can remove particles from exhaust emissions by capturing the particles on the wall around the pores. The exhaust gas treatment members are made of metal, alloys, or ceramics, etc. Cordierite honeycomb filters are known as an example of exhaust gas treatment members made of ceramics. In recent years, porous sintered silicon carbide is used as the material of the exhaust gas treatment members in view of heat resistance, physical strength, chemical stability, etc.

In general, a holding and sealing member is interposed between such an exhaust gas treatment member and a metal shell. The holding and sealing member is used for preventing the exhaust gas treatment member and the metal shell from being damaged by contact with each other while the vehicle is moving, as well as for preventing leakage of exhaust gases from gaps between the metal shell and the exhaust gas treatment member. The holding and sealing member is also used for preventing the exhaust gas treatment member from dropping off due to pressure of exhaust gases. The holding and sealing member needs to have thermal insulation properties for keeping the exhaust gas treatment member at high temperature in order to maintain the reactivity of the exhaust gas treatment member. Sheet members made of inorganic fibers, such as alumina fibers, may satisfy such requirements.

A typical sheet member is wound on at least a part of the outer surface of the exhaust gas treatment member except opening areas and integrally secured to the exhaust gas treatment member by taping. Thus, the sheet member serves as the holding and sealing member. The integrally secured holding and sealing member and the exhaust gas treatment member are then press-fitted into the metal shell so as to be installed inside the exhaust emission control device.

As the sheet members made of inorganic fibers are bulky, various methods have been proposed that facilitate attachment of the sheet members as the holding and sealing members to the metal shells. For example, Patent Document 1 discloses a method of reducing the thickness of a laminated sheet member made of inorganic fibers by impregnating the sheet member with an organic binder and applying the organic binder to the sheet member. Patent Document 2 discloses a method of reducing the thickness of a bulky laminated sheet member made of inorganic fibers by compressing the sheet member with a needling process or the like, in which the inorganic fibers are interlocked with each other in the thickness direction of the sheet member.
<Patent Document 1> Japanese Patent Laid-Open Publication No. 59-126023
<Patent Document 2> Japanese Patent Laid-Open Publication No. 2000-220448

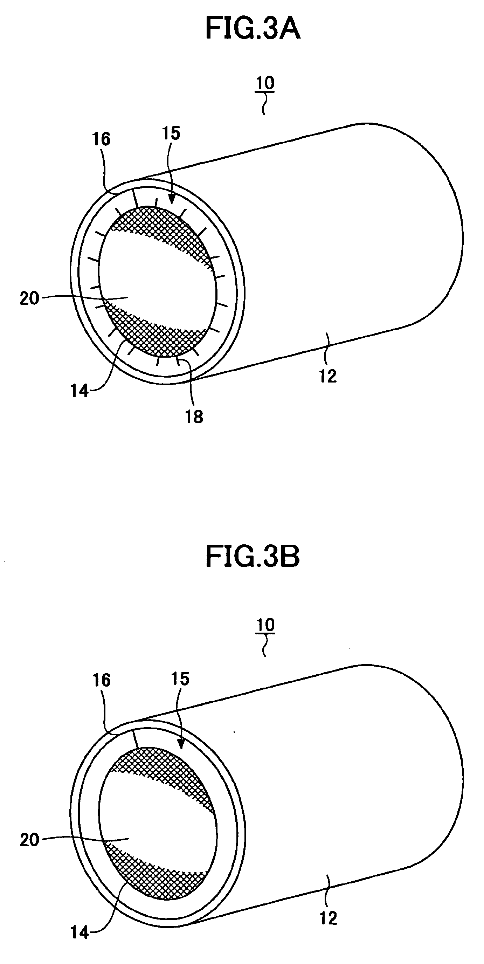

However, with reference to Fig. 3A, these methods have a problem in that when the sheet member as the holding and sealing member is wound on, e.g., a cylindrical exhaust gas treatment member 20, "creases" 18 are formed at the inner surface side of the holding and sealing member due to the difference between the circumferential lengths of the holding and sealing member on the inner surface side (the exhaust gas treatment member 20 side) and the outer surface side (the metal shell 12 side). The creases 18 reduce sealing properties due to leakage of exhaust gases from the holding and sealing member (sheet member). Moreover, as stress is likely to concentrate locally at the creases 18 when the holding and sealing member is attached to the metal shell 12 integrally with the exhaust gas treatment member 20, the holding and sealing member might be broken at the creases 18. In that event, as the holding and sealing member loses the above-described functions, the exhaust gas treatment member 20 may drop off or may be damaged.

Recently, the fiber diameter of the inorganic fibers of the sheet members has been made greater and greater for reason of health concerns of assembly workers. Specifically, the average fiber diameter of the inorganic fibers, which is now 6 µm, is expected to be increased to 7 µm. If the fiber diameter is increased, the problems with bulkiness of the sheet members and the problems with the creases formed in the wound sheet members will be more serious.

### SUMMARY OF THE INVENTION

The present invention may solve at least one problem described above.

According to an aspect of the present invention, there are provided a holding and sealing member that is easily attached to an exhaust gas treatment member and has better gas sealing properties and a greater force for holding the exhaust gas treatment device, and an exhaust emission control device including the holding and sealing member.

According to another aspect of the present invention, there is provided a holding and sealing member that holds an exhaust gas treatment member, comprising a sheet member that is made of inorganic fibers and has a first surface and a second surface, wherein the first and second surfaces are corrugated such that a corrugation height of the first surface is greater than a corrugation height of the second surface.

It is preferable that the sheet member be a laminated sheet of inorganic fibers that has been subjected to a needling process. The fibers are interlocked in the thickness direction of the sheet by the needling process, so that the density of the sheet member is increased, thereby increasing the surface pressure. Moreover, the thickness of the sheet member can be reduced in a predetermined direction.

It is also preferable that the sheet member contain a bonding material. The bonding material can make the fibers adhere to each other and prevent the fibers from coming apart when the holding and sealing member is cut or fitted into a metal shell. The bonding material may be an organic bonding material or an inorganic bonding material. Examples of organic bonding material include epoxy resin, acrylic resin, rubber resin, styrene resin, etc. Examples of inorganic bonding material include silica sol, alumina sol, etc. The organic bonding material is more preferable because the resin is dissolved and removed by heat of exhaust gases so as to increase the surface pressure of the sheet member on the exhaust gas treatment member, thereby improving the holding performance.

It is also preferable for the sheet member of the above-described holding member that the corrugation height of the first surface be 1.2 - 56.7 times the corrugation height of the second surface. The sealing properties of the holding and sealing member are further improved by satisfying this condition.

It is also preferable that the average diameter of the inorganic fibers of the sheet member be 6 µm or greater. If the average diameter of the inorganic fibers is less than 6 µm, creases are formed when the sheet member is wound on the exhaust gas treatment member, resulting in a significant drop of a pull-out load (force required to pull out the exhaust gas treatment member). On the other hand, as the creases are prevented if the average diameter of the inorganic fibers is 6 µm or greater, the problem of the drop of the pull-out load is solved.

It is also preferable that the inorganic fibers of the sheet member be made of a compound of alumina and silica. This is because heat insulating properties are improved.

The exhaust gas treatment member may be a catalyst carrier or an exhaust gas filter.

According to still another aspect of the present invention, there is provided an exhaust emission control device that comprises an exhaust gas treatment member, a metal shell that accommodates the exhaust gas treatment member, and a holding and sealing member that is wound on at least a part of an outer surface of the exhaust gas treatment member except opening areas, wherein the holding and sealing member includes a sheet member that is made of inorganic fibers and has a first surface and a second surface, the first and second surfaces being corrugated such that a corrugation height of the first surface is greater than a corrugation height of the second surface, and wherein the holding and sealing member is wound and secured such that the second surface of the sheet member is in contact with the outer surface of the exhaust gas treatment member.

Since the above exhaust emission control device comprises the holding and sealing member having better sealing properties and a greater holding force as described above, leakage of exhaust gases is prevented even when the pressure loss of the exhaust gas treatment member is increased. Moreover, the exhaust gas treatment member is prevented from being pushed out of the metal shell by the pressure of exhaust gases. Therefore, the frequency of replacement of the exhaust gas treatment members can be reduced. That is, the operating life of the exhaust emission control device can be extended while increasing durability thereof.

In one embodiment of the present invention, the holding and sealing member is put in tight contact with the outer surface of the exhaust gas treatment member inside the metal shell, so that the holding and sealing member seals gaps between the metal shell and the exhaust gas treatment member.

The sheet member of the holding and sealing member included in the above exhaust emission control device may have any of the above-described characteristics. Further, the exhaust gas treatment member included in the above exhaust emission control device may be a catalyst carrier or an exhaust gas filter. If the exhaust gas treatment member is a catalyst carrier or an exhaust gas filter, the exhaust emission control device can achieve better gas sealing properties and a better performance for holding the catalyst carrier or the exhaust gas filter.

According to the above exhaust emission control device comprising the holding and sealing member of the present invention, the holding and sealing member can be easily attached to the exhaust gas treatment member. Moreover, the gas sealing properties and the performance for folding the exhaust gas treatment member can be improved because effects due to the difference between the circumferential lengths of the holding and sealing member on the outer surface side and the inner surface side are minimized.

### BRIEF DESCRIPTION OF THE DRAWINGS

Fig. 1A is a perspective view illustrating an example of a sheet member of a holding and sealing member according to an embodiment of the present invention;
Fig. 1B is a schematic illustration showing how to wind and fix a holding and sealing member on an exhaust gas treatment member and how to press-fit the holding and sealing member and the exhaust treatment member into a metal shell to form an exhaust emission control device;
Fig. 2A is a cross-sectional view of the sheet member taken along line A-A of Fig. 1A;
Fig. 2B is a conceptual diagram illustrating effects of a holding and sealing member according to an embodiment of the present invention;
Fig. 3A is a schematic illustration showing a metal shell to which a related-art holding and sealing member and an exhaust gas treatment member are integrally attached;
Fig. 3B is a schematic illustration showing a metal shell to which a holding and sealing member as an embodiment of the present invention and an exhaust gas treatment member are integrally attached;
Fig. 4 is a schematic diagram illustrating an example of an exhaust emission control device according to an embodiment of the present invention;
Fig. 5A is a picture showing the shape of a first surface of a sheet member according to Example 1 of the present invention;
Fig. 5B is a picture showing the shape of a second surface of a sheet member according to Example 1 of the present invention;
Fig. 6 is a graph showing a relationship between the corrugation height ratio of a first surface to a second surface and the pull-out load; and
Fig. 7 is a graph showing a relationship between the average fiber diameter and the pull-out load.

### DETAILED DESCRIPTION OF THE PREFERRED EMBODIMENT

The following description provides exemplary embodiments of the present invention with reference to the accompanying drawings.

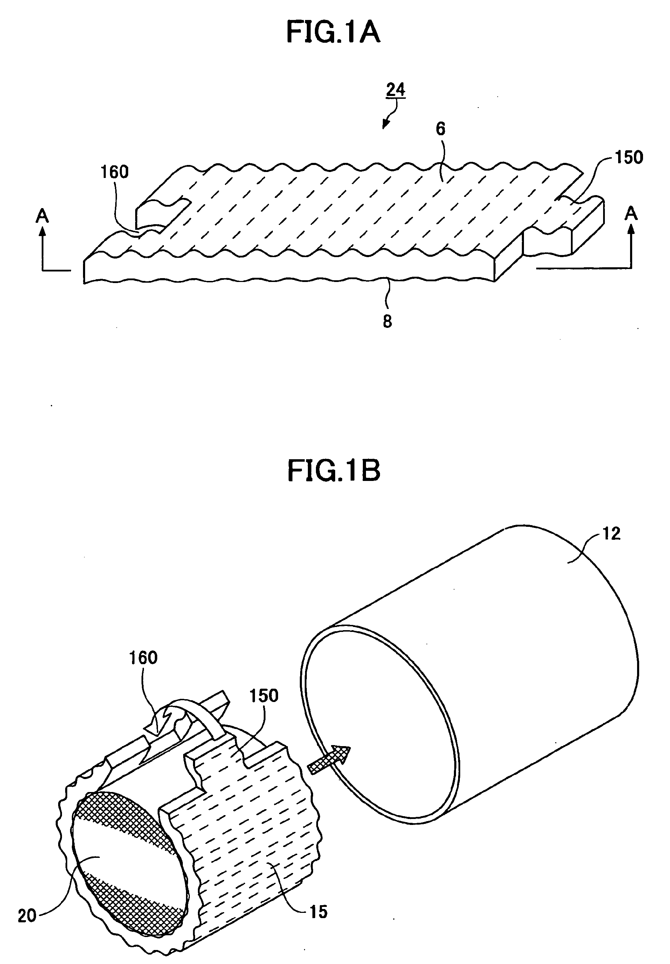

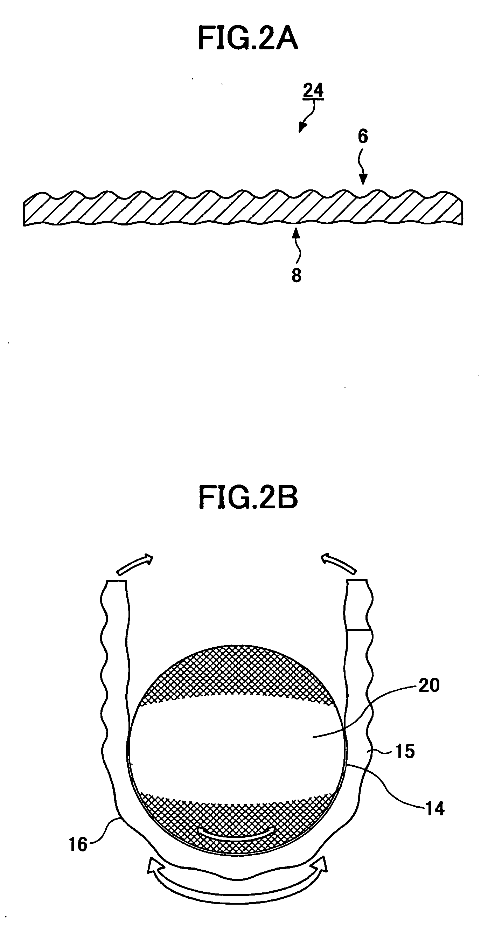

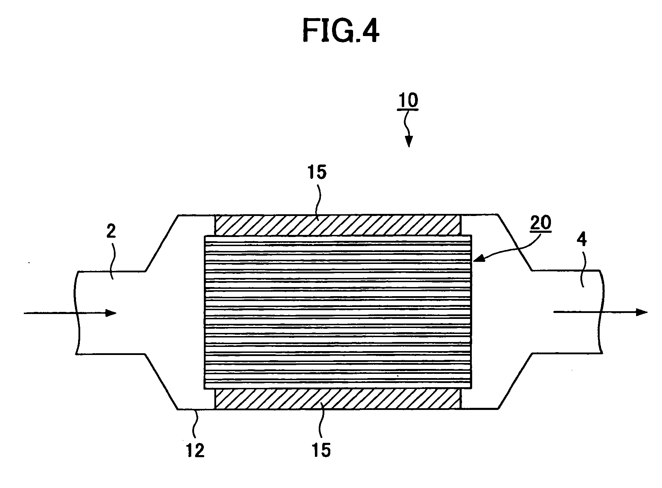

Referring to Figs. 1A and 1B, in one embodiment of the present invention, a holding and sealing member 15 for use in an exhaust emission control device 10 (Figs. 3A, 3B, and 4) for holding an exhaust gas treatment member 20 includes a sheet member 24 made of inorganic fibers. The sheet member 24 has a first surface 6 and a second surface 8. As shown in Fig. 1A and Fig. 2A, which is a cross-sectional view taken along line A-A of Fig. 1A, the first and the second surfaces 6 and 8 of the sheet member 24 are corrugated such that the corrugation height of the first surface 6 is greater than the corrugation height of the second surface 8. As shown in Fig. 1B, the holding and sealing member 15 is wound on the exhaust gas treatment member 20 such that the second surface 8 of the sheet member 24 is in contact with at least a part of the outer surface of the exhaust gas treatment member 20, and secured by fitting a projecting portion 150 into a recessed portion 160. When the holding and sealing member 15 thus secured to the exhaust gas treatment member 20 is press-fitted in a metal shell 12, the holding and sealing member 15 can be kept in tight contact with the outer surface of the exhaust gas treatment member 20 without having creases 18, although the rate of elongation of an outer surface side (the metal shell 12 side) 16 of the holding and sealing member 15 is higher than the rate of elongation of an inner surface side (the exhaust gas treatment member 20 side) 14 as shown in Fig. 2B. This tight contact is because the corrugations compensate for the elongation. Therefore, the holding and sealing member 15 press-fitted in the metal shell 12 shows higher sealing performance and holds the exhaust gas treatment member 20 more securely.

The corrugation height of each of the first and second surfaces 6 and 8 of the sheet member 24 is determined in the following manner. Photographs of the cross section of the sheet member 24 at given points are taken five times at 12-fold magnification. The height difference between the highest elevation and the deepest groove in each photograph is measured. The average of the differences is defined as the corrugation height.

As described above, the sheet member 24 of the holding and sealing member 15 has the first surface 6 and the second surface 8 having different corrugation heights. The sheet member 24 is wound on the outer surface of the exhaust gas treatment member 20 so as to have the first surface 6 with the higher corrugations and the second surface 8 with the shorter corrugations at the outer surface side (the metal shell 12 side) 16 and the inner surface side (the exhaust gas treatment member 20 side) 14 of the holding and sealing member 15, respectively. Thus, the corrugations of the first surface 6 of the sheet member 24 compensate for the elongation to reduce effects due to the difference between the circumferential lengths of the holding and sealing member 15 on the outer surface side 16 and the inner surface side 14, thereby preventing the creases 18 at the inner surface side 14 resulting from the difference between the lengths of the outer circumference and the inner circumference (see Fig. 3B). Accordingly, the gas sealing properties of the holding and sealing member 15 of the exhaust emission control device 10 are improved. Moreover, the holding and sealing member 15 is prevented from being broken due to stress concentrated at the creases 18, so that the force of the holding and sealing member 15 for holding the exhaust gas treatment member 20 lasts for an extended time period.

The corrugation height of the first surface 6 of the sheet member 24 is preferably 1.2 - 56.7 times the corrugation height of the second surface 8. Having the corrugation heights of the first and second surfaces 6 and 8 that meet this condition increases the force of the holding and sealing member 15 for holding the exhaust gas treatment member 20 as described below. If the corrugation height of the first surface 6 of the sheet member 24 is greater than 56.7 times the corrugation height of the second surface 8, the creases 18 are formed at the outer surface side 16 when the holding and sealing member 15 is wound on the exhaust gas treatment member 20, resulting in reducing the sealing properties of the holding and sealing member 15. If the corrugation height of the first surface 6 is less than 1.2 times the corrugation height of the second surface 8, the effects of the present invention are not sufficiently exerted. The corrugation height of the first surface 6 of the sheet member 24 is more preferably 1.2 - 28.3 times the corrugation height of the second surface 8. Having the corrugation heights of the first and second surfaces 6 and 8 that meet this condition further increases the force of the holding and sealing member 15 for holding the exhaust gas treatment member 20 while further reducing the creases 18 in the holding and sealing member 15. The above preferred range of the corrugation height ratio of the first surface 6 to the second surface 8 may vary depending on the relationship between the diameter of the object on which the holding and sealing member 15 is wound and the thickness of the holding and sealing member 15. Generally, as the radius of the object, i.e., the exhaust gas treatment member 20, on which the holding and sealing member 15 is wound is increased, the thickness of the holding and sealing member 15 is also increased in proportion thereto. Accordingly, even if the diameter of the exhaust gas treatment member 20 is changed, it is assumed that the preferred range (1.2 - 56.7 times) of the corrugation height ratio of the first surface 6 to the second surface 8 (i.e., the corrugation height of the first surface 6/the corrugation height of the second surface 8) changes little.

Fig. 4 shows an example of the exhaust emission control device 10 comprising the above-described holding and sealing member 15. While the exhaust gas treatment member 20 of the exhaust emission control device 10 shown in Fig. 4 is a catalyst carrier having through pores, the exhaust emission control device 10 of the present invention may alternatively include the exhaust gas treatment member 20 having a different configuration. For example, the exhaust gas treatment member 20 may be a DPF having pores a part of each of which is closed. The exhaust emission control device 10 with such a configuration may have better gas sealing properties and hold the exhaust gas treatment member 20 more securely by having the above-described holding and sealing member 15.

The maximum corrugation height of the first and second surfaces 6 and 8 of the sheet member 24 is preferably equal to or less than half of the thickness of the sheet member 24. If maximum corrugation height is greater than half of the thickness of the sheet member 24, the fibers might be damaged when the corrugation heights of the first and second surfaces 6 and 8 of the sheet member 24 are adjusted during a compression and drying process (described below).

The following describes an example of a method of producing the holding and sealing member 15 according to an aspect of the present invention.

The sheet member 24 of the holding and sealing member 15 can be produced in the following way.

First, a laminated sheet of inorganic fibers is produced. It is to be noted that although a compound of alumina and silica is used as the material of the inorganic fibers in the following description, the inorganic fibers may be made of other materials. For example, the inorganic fibers may be made of alumina only, or silica only. Silica sol is added to a basic aluminum chloride solution of Al/Cl=1.8 (atom ratio) containing 70 g of aluminum so as to have an alumina-silica composition ratio of, e.g., 60 - 80:40 - 20, thereby preparing an inorganic fiber precursor. Preferably, the alumina-silica composition ratio is approximately 70 - 74:30 - 26. If the alumina proportion is 60% or less, the proportion of mullite produced from alumina and silica is lowered. As a result, the thermal conductivity of the sheet member 24 is increased, so that sufficient thermal insulation properties cannot be obtained.

Then, an organic polymer, such as polyvinyl alcohol, is added to this alumina-based fiber precursor. The resulting solution is then concentrated so as to obtain a spinning solution. The spinning solution is spun with a blowing method.

The blowing method is a method of spinning using airflow blown out from an air nozzle and the flow of the spinning solution pushed out from a spinning solution supply nozzle. The gas velocity flow rate velocity though a slit of the air nozzle is usually 40 - 200 m/s. The diameter of the spinning nozzle is usually 0.1 - 0.5 mm. The flow rate per spinning solution supply nozzle is usually about 1 - 120 ml/h, and preferably about 3 - 50 ml/h. The spinning solution pushed out from such a spinning solution supply nozzle under these conditions is fully elongated without being in the form of spray (mist), and the produced fibers are hard to make adhere to each other. Therefore, under optimal spinning conditions, a homogenous alumina fiber precursor having a small fiber diameter distribution is obtained.

The average fiber length of the alumina-based fibers produced herein is preferably 250 µm or greater, and more preferably 500 µm or greater. If the average fiber length is less than 250 µm, the fibers are not interlocked with each other enough to have sufficient strength. There are no specific limitations on the average diameter of the inorganic fibers. It is to be noted that the effects of the present invention can be achieved even if the average diameter of the inorganic fibers is 7 µm or greater according to an aspect of the present invention.

Then, the spun precursor is laminated so as to obtain a laminated sheet. The laminated sheet then goes through a needling process. The needling process is for reducing the thickness of the laminated sheet by punching the sheet with needles. Generally, a needling device is used for the needling process. A typical needling device comprise a needle board that is reciprocally movable in the punching direction and a pair of support boards disposed one on each side of the laminated sheet. A number of needles used for punching the laminated sheet are fixed to the needle board with a density of, e.g., approximately 100 - 5000 sets/100 cm². The support boards have through holes for the needles. When the laminated sheet is punched with the needles using such a needling device during the needling process, the fibers are intricately interlocked with each other in the laminating direction. Thus, the strength of the laminated sheet is increased in the laminating direction.

The sheet member 24, which is the laminated sheet subjected to the needling process, is heated from room temperature so as to be continuously heated at a maximum temperature of about 1250 °C. Thus, the sheet member 24 having a predetermined weight is obtained.

The obtained sheet member 24 is cut to a predetermined size for easier handling.

The cut sheet member 24 is preferably impregnated with an organic bonding material. The sheet member 24 impregnated with the organic bonding material has less bulkiness, and therefore the holding and sealing member 15 comprising the sheet member 24 can be easily attached to the exhaust gas treatment member 20 of the exhaust emission control device 10. Moreover, the impregnation with the organic bonding material prevents the inorganic fibers of the sheet member 24 from coming apart and therefore prevents lowering of the holding force. The organic bonding material impregnated in the holding and sealing member 15 disappears when high-temperature exhaust gases flow into the exhaust emission control device 10, so that the holding and sealing member 15 being compressed is restored. Accordingly, any small gaps between the metal shell 12 and the exhaust gas treatment member 20 are filled if any, thereby increasing the holding force and improving the sealing properties of the holding and sealing member 15.

The proportion of the organic bonding material is preferably in a range of 1.0 - 10.0% by weight. If the proportion of the organic bonding material is less than 1.0% by weight, the inorganic fibers are not adequately prevented from coming apart. On the other hand, if the proportion of the organic bonding material is greater than 10.0% by weight, it becomes difficult to wind the sheet member 24 on the exhaust gas treatment member 20 because of reduction of ductility.

The organic bonding material used herein may preferably be, for example, acrylic rubber (ACM), acrylonitrile-butadiene rubber (NBR), and styrene-butadiene rubber (SBR) resins.

An aqueous dispersion prepared from such an organic bonding material and water is sprayed onto the sheet member 24 such that the resin is impregnated into the sheet member 24. Excess solids and moisture contained in the sheet member 24 are removed in the following step.

The sheet member 24 is subjected to a process for removing the excess solids and a drying process. The excess solids are removed with a suction method. The excess moisture is removed with a heat compression and drying method. With this method, as described below, not only is the excess moisture removed, but also the corrugations of the first and second surfaces 6 and 8 of the sheet member 24 having predetermined heights are formed with the adhesive force of the organic bonding material by pressing the sheet member 24 with various corrugated patterns or by compressing the sheet member 24. The sheet member 24 is dried at a temperature of about 95 - 155 °C. If the temperature is lower than 95 °C, the drying time is increased, resulting in reducing the production efficiency. On the other hand, if the drying temperature is higher than 155 °C, the organic bonding material is decomposed, resulting in losing the adhesiveness of the organic bonding material.

The corrugations may be formed before cutting the sheet member 24.

During the drying process, upper and lower jigs having respective upper and lower patterns are used, which hold the sheet member 24 therebetween. The first and second surfaces 6 and 8 of the sheet member 24 having the corrugation heights in the above range can be obtained after the compression and drying process by using the upper and lower patterns having corrugations of a predetermined corrugation height ratio. In the final step, the sheet member 24 is cut into a predetermined shape.

In this way, the sheet member 24 is obtained that is made of alumina-based fibers, impregnated with the organic bonding material, and has the first and second surfaces 6 and 8 having predetermined corrugation heights. Although the sheet member 24 shown in Fig. 1A has the projecting portion 150 at one end face perpendicular to the winding direction and the recessed portion 160 at the other end face, the sheet member 24 is not limited to this shape. Although the corrugations having the same width are uniformly formed across the first surface 6 in the accompanying drawings, the corrugations of the first and second surfaces 6 and 8 are not limited to the forms shown in the accompanying drawings. For example, the corrugations of the first and second surfaces 6 and 8 may be replaced with other forms as long as the corrugation (or other form) heights of the first and second surfaces 6 and 8 have the above-described relationship.

The thus produced sheet member 24 is used as the holding and sealing member 15 for the exhaust gas treatment member 20 of the exhaust emission control device 10. The sheet member 24 is wound on the exhaust gas treatment member 20 so as to have the second surface 8 with the shorter corrugations at the inner surface side (the exhaust gas treatment member 20 side) 14 (see Fig. 2B) as well as to generate tension in the winding direction. Thus, the difference between the circumferential lengths of the holding and sealing member 15 on the inner surface side 14 and the outer surface side 16 is made up, thereby preventing the creases 18 at the inner surface side 14. Accordingly, the sealing properties and the holding force of the holding and sealing member 15 are increased.

The exhaust emission control device 10 including this holding and sealing member 15 can provide better gas sealing properties and a greater holding force.

The following describes effects of the present invention with reference to examples.

### <Examples>

The sheet member 24 was produced with the following steps.

### <Producing the sheet member>

Silica sol was added to a basis aluminum chloride solution of Al/Cl=1.8 (atom ratio) containing 70 g of aluminum so as to have alumina-based fibers with a composition of Al₂O₃:SiO₂=72:28, thereby preparing an alumina-based fiber precursor.

Then, an organic polymer, such as polyvinyl alcohol, was added to this alumina-based fiber precursor. The resulting solution was then concentrated so as to obtain a spinning solution. The spinning solution was spun with a blowing method.

The alumina-based fiber precursor was folded so as to obtain a laminated sheet. The laminated sheet went through a needling process with use of a needle board having needles with a density of 500 sets/100 cm² so as to obtain a sheet member 24. The sheet member 24 was heated from room temperature so as to be continuously heated at a maximum temperature of 1250 °C. Thus, the sheet member 24 of alumina-based fibers having a weight of 1160 g/cm² was obtained. The average diameter and the minimum diameter of the alumina-based fibers were 7.2 µm and 3.2 µm, respectively. The thickness of the sheet member 24 was 9 mm.

The average diameter of the fibers was measured with the following method. The alumina-based fibers were placed in a cylinder and milled with a pressure of 20.6 MPa. The resulting sample was placed on a sieve. Gold or the like was deposited on the surface of the sample that had passed through the sieve, and an electron micrograph of the sample was taken at approximately 1500-fold magnification. The diameters of at least 40 fibers on the electron microphotograph were measured. The sampling and measurement were performed five times, and the average diameter of the fibers was calculated by averaging the measured diameters.

### <Cutting the sheet member>

The sheet member 24 produced with the above-described steps was cut to a size of 1270 mm in length and 1280 mm in width.

### <Impregnating with the organic bonding material>

The cut sheet member 24 was impregnated with an organic bonding material. An acrylic resin aqueous dispersion (Lx803 from ZEON corporation; solid concentration 50±10%, pH 5.5 - 7.0) was prepared to have resin concentration in a range of 1.0 - 10.0 wt% so as to obtain an impregnating solution. The impregnating solution was sprayed onto the sheet member 24 so as to be impregnated therein.

### <Suctioning solids>

As solids in excess of a predetermined amount were adhered to the sheet member 24 impregnated with the organic bonding material, the excess solids were removed by a suctioning process (about three seconds). After that, the impregnation rate of the organic bonding material in the sheet member 24 was measured and found to be 10 wt%.

### <Heat compression and drying process>

After the suctioning process, the sheet member 24 went through a heat compression and drying process at a drying temperature of 95 - 155 °C. The average thickness of the sheet member 24 after the heat compression and drying process was approximately 8 mm. Upper and lower jigs used for holding the sheet member 24 during this process have different corrugation heights so as to produce the sheet member 24 having the first and second surfaces 6 and 8 with different corrugation heights. More specifically, both the upper and lower jigs used herein have corrugated patterns, and the corrugation height of the upper pattern is 850 µm while the corrugation height of the lower pattern is 500 µm. Thus, after the compression and drying process, the sheet member 24 having the first surface 6 with a corrugation height of 850 µm and the second surface 8 with a corrugation height of 500 µm (i.e., having a corrugation height ratio of the first surface 6 to the second surface 8 of 1.7) was obtained (Example 1).

In Example 2, 3, and 5 - 7 and Comparative Examples 1 - 3, sheet members 24 were produced with the same steps as described above except in that the upper and lower jigs used for holding the sheet members 24 during the heat compression and drying process were different. Both or one of the corrugation heights of the first and second surfaces 6 and 8 of the sheet members 24 of Example 2, 3, and 5 - 7 and Comparative Examples 1 - 3 were different from the corrugation heights of the first and second surfaces 6 and 8 of the sheet member 24 of Example 1 although other production conditions of Example 2, 3, and 5 - 7 and Comparative Examples 1 - 3 were the same as those of Example 1. Although a sheet member 24 of Example 4 has the same corrugation heights as the sheet member 24 of Example 3, the average diameter of the fibers of the sheet member 24 of Example 4, which is 5.7 µm, is different from the sheet member 24 of Example 3. Table 1 shows average fiber diameters, corrugation heights of the first and second surfaces 6 and 8, and corrugation height ratios of the sheet members 24 of Examples 1 - 7 and Comparative Examples 1 - 3.

**<Table 1>**

| | Average fiber diameter µm | Corrugation height of 1st surface µm | Corrugation height of 2nd surface µm | Corrugation height ratio - | The number of creases × length mm | Pull-out load N | Evaluation |
|---|---|---|---|---|---|---|---|
| Example 1 | 7.2 | 850 | 500 | 1.7 | 3 | 555 | ⊚ |
| Example 2 | 7.2 | 850 | 700 | 1.2 | 4 | 521 | ⊚ |
| Example 3 | 7.2 | 2550 | 90 | 28.3 | 6 | 412 | ⊚ |
| Example 4 | 5.7 | 2550 | 90 | 28.3 | 6 | 453 | ⊚ |
| Example 5 | 7.2 | 2550 | 80 | 31.9 | 7 | 376 | ○ |
| Example 6 | 7.2 | 2550 | 55 | 46.4 | 8 | 312 | ○ |
| Example 7 | 7.2 | 2550 | 45 | 56.7 | 10 | 225 | ○ |
| Comparative Example 1 | 7.2 | 680 | 850 | 0.8 | 20 | 137 | × |
| Comparative Example 2 | 7.2 | 850 | 850 | 1.0 | 18 | 162 | × |
| Comparative Example 3 | 7.2 | 120 | 120 | 1.0 | 15 | 148 | × |

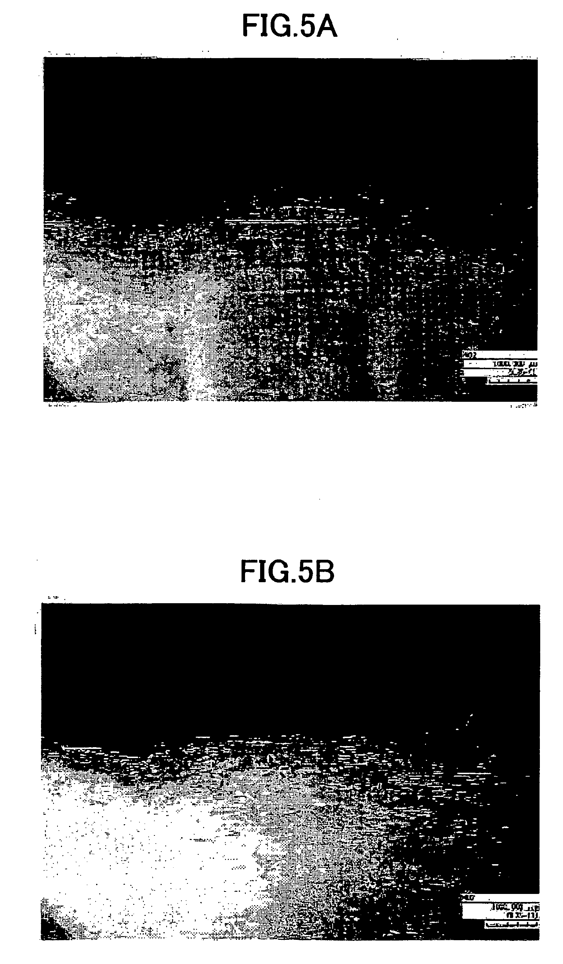

The corrugation heights of the sheet members 24 were measured by observation of cross-sectional shapes with an optical microscope as described above. Figs. 5A and 5B show the cross-sectional shapes of the first surface 6 and the second surface 8 of the sheet member 24 of Example 1 (corrugation height ratio=1.7), respectively, by way of example.

Then, the obtained sheet members 24 were cut into predetermined shapes (described below) for various evaluation tests. In a pull-out load measurement, effects of the average fiber diameters of the sheet members 24 were also evaluated. The following describes the results of the tests.

### <Result of crease measurement>

Each of the sheet members 24 of Example 1 - 7 and Comparative Example 1- 3 was wound on the exhaust gas treatment member 20 such that the second surface 8 having a smaller corrugation height is in contact with the exhaust gas treatment member 20. Then the number of creases formed at the inner surface side of the sheet member 24 and the length of the creases were measured. The exhaust gas treatment member 20 used herein was a catalyst carrier having a diameter of 80 mm and a length of 150 mm. Each sheet member 24 used herein has the projecting portion 150 with a length of approximately 40 mm at an end thereof in the winding direction and the recessed portion 160 at the other end thereof. The sheet member 24 has a maximum length of 290 mm, and a width of 80 mm. The sheet member 24 was tightly and uniformly wound on the catalyst carrier, and connected at the ends by fitting the projecting portion 150 into the recessed portion 160.

The obtained results of Examples 1 - 7 and Comparative Examples 1 - 3 are shown in Table 1. As can be seen from Table 1, it was found that the value (mm) of the number of creasesxthe length is relatively small when the corrugation height of the first surface 6 is 1.2 - 56.7 times the corrugation height of the second surface 8 regardless of the average fiber diameter.

### <Result of pull-out load measurement>

Each sheet member 24 was wound on the exhaust gas treatment member 20 such that the second surface 8 having the smaller corrugation height is in contact with the exhaust gas treatment member 20. The thus integrated sheet member 24 and the exhaust gas treatment member 20 were press-fitted into a metal shell 12 made from SUS304 steel. After maintaining this condition for 24 hours, pull-out load tests were performed using a universal testing machine. The exhaust gas treatment member 20 used herein was a catalyst carrier having a diameter of 80 mm and a length of 150 mm. Each sheet member 24 used herein has the projecting portion 150 with a length of approximately 40 mm at an end thereof in the winding direction and the recessed portion 160 at the other end thereof. The sheet member 24 has a maximum length of 290 mm, and a width of 80 mm. The sheet member 24 was wound on the catalyst carrier, and connected at the ends by fitting the projecting portion 150 into the recessed portion 160. The metal shell 12 used herein has an inner diameter of 84 mm, a length of 200 mm, and a thickness of 1.5 mm. It is found from experiments conducted in the past that when the pull-out load is greater than 200 N, the force of the holding and sealing member 15 for holding the exhaust gas treatment member 20 is great enough for practical use.

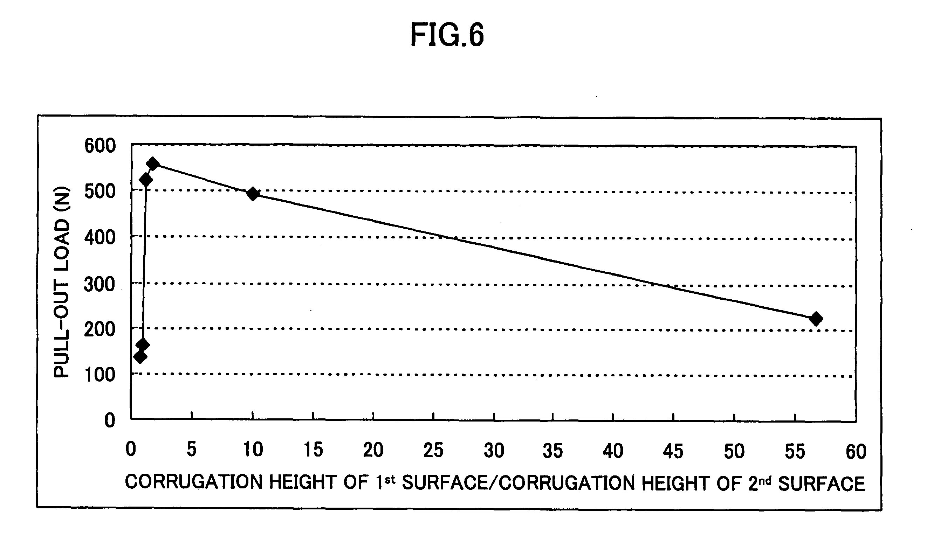

The results of the test were shown in Table 1 and Fig. 6. The pull-out load as used herein shall mean the maximum load required to pull out the catalyst carrier press-fitted in the metal shell 12. It was found from the results that, regardless of the average fiber diameter, when the corrugation height of the first surface 6 is 1.2 - 56. 7 times the corrugation height of the second surface 8, the holding and sealing member 15 has a pull-out load greater than 200 N and provides a great holding force. It was also found that when the corrugation height of the first surface 6 of the sheet member 24 is 1.2 - 28.3 times the corrugation height of the second surface 8, the holding and sealing member 15 comprising this sheet member 24 has a pull-out load greater than 400 N and provides a greater holding force.

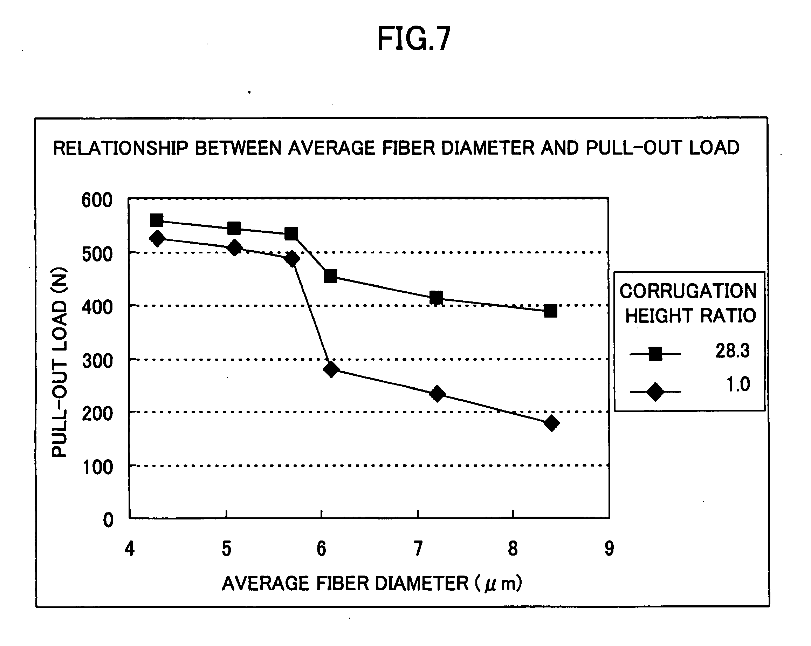

Fig. 7 is a graph showing the average fiber diameter and the pull-out load. If the corrugation height of the first surface 6 of the sheet member 24 is the same as the corrugation height of the second surface 8 (i.e., the corrugation height ratio=1.0), the pull-out load rapidly drops when the average fiber diameter exceeds 6 µm. On the other hand, if the corrugation height ratio of the first surface 6 to the second surface 8 is 28.3, the pull-out load remains relatively high regardless of the average fiber diameter. In other words, compared to the case where the corrugation height ratio is 1.0, the pull-out load is significantly increased when the average fiber diameter exceeds 6 µm.

## Claims

1. A holding and sealing member that holds an exhaust gas treatment member, **characterized by**:
a sheet member that is made of inorganic fibers and has a first surface and a second surface;
wherein the first and second surfaces are corrugated such that a corrugation height of the first surface is greater than a corrugation height of the second surface.

2. The holding and sealing member as claimed in claim 1, **characterized in that** the sheet member is a laminated sheet of the inorganic fibers that has been subjected to a needling process.

3. The holding and sealing member as claimed in claim 1 or claim 2, **characterized in that** the sheet member contains a bonding material.

4. The holding and sealing member as claimed in any one of claims 1 through 3, **characterized in that** the corrugation height of the first surface is 1.2 - 56.7 times the corrugation height of the second surface.

5. The holding and sealing member as claimed in any one of claims 1 through 4, **characterized in that** an average diameter of the inorganic fibers is 6 µm or greater.

6. The holding and sealing member as claimed in any one of claims 1 through 5, **characterized in that** the inorganic fibers are made of a compound of alumina and silica.

7. The holding and sealing member as claimed in any one of claims 1 through 6, **characterized in that** the exhaust gas treatment member is a catalyst carrier or an exhaust gas filter.

8. The holding and sealing member as claimed in any one of claims 1 through 7, **characterized in that** the holding and sealing member is wound on at least a part of an outer surface of the exhaust gas treatment member except opening areas and secured such that the second surface of the sheet member is in contact with the outer surface of the exhaust gas treatment member.

9. An exhaust emission control device **characterized by**:
an exhaust gas treatment member;
a metal shell that accommodates the exhaust gas treatment member; and
a holding and sealing member that is wound on at least a part of an outer surface of the exhaust gas treatment member except opening areas;
wherein the holding and sealing member includes a sheet member that is made of inorganic fibers and has a first surface and a second surface, the first and second surfaces being corrugated such that a corrugation height of the first surface is greater than a corrugation height of the second surface; and
the holding and sealing member is wound and secured such that the second surface of the sheet member is in contact with the outer surface of the exhaust gas treatment member.

10. The exhaust emission control device as claimed in claim 9, **characterized in that** the sheet member is a laminated sheet of the inorganic fibers that has been subjected to a needling process.

11. The exhaust emission control device as claimed in claim 9 or claim 10, **characterized in that** the sheet member contains a bonding material.

12. The exhaust emission control device as claimed in any one of claims 9 through 11, **characterized in that** the corrugation height of the first surface is 1.2 - 56.7 times the corrugation height of the second surface.

13. The exhaust emission control device as claimed in any one of claims 9 through 12, **characterized in that** an average diameter of the inorganic fibers is 6 µm or greater.

14. The exhaust emission control device as claimed in any one of claims 9 through 13, **characterized in that** the inorganic fibers are made of a compound of alumina and silica.

15. The exhaust emission control device as claimed in any one of claims 9 through 14, **characterized in that** the exhaust gas treatment member is a catalyst carrier or an exhaust gas filter.

## Patentansprüche

1. Halte- und Dichtungselement, das ein Abgasbehandlungselement hält, **gekennzeichnet durch**:
ein aus anorganischen Fasern gefertigtes Blattelement, das eine erste Oberfläche und eine zweite Oberfläche aufweist;
bei dem die erste und zweite Oberfläche so gewellt sind, dass eine Furchenhöhe der ersten Oberfläche größer als eine Furchenhöhe der zweiten Oberfläche ist.

2. Halte- und Dichtungselement nach Anspruch 1, **dadurch gekennzeichnet, dass** das Blattelement ein geschichtetes Blatt aus den anorganischen Fasern ist, welches einem Nadelungsprozess unterworfen wurde.

3. Halte- und Dichtungselement nach Anspruch 1 oder 2, **dadurch gekennzeichnet, dass** das Blattelement ein Bindematerial enthält.

4. Halte- und Dichtungselement nach einem der Ansprüche 1 bis 3, **dadurch gekennzeichnet, dass** die Furchenhöhe der ersten Oberfläche 1.2 - 56.7 mal der Furchenhöhe der zweiten Oberfläche ist.

5. Halte- und Dichtungselement nach einem der Ansprüche 1 bis 4, **dadurch gekennzeichnet, dass** ein mittlerer Durchmesser der anorganischen Fasern 6 µm oder größer ist.

6. Halte- und Dichtungselement nach einem der Ansprüche 1 bis 5, **dadurch gekennzeichnet, dass** die anorganischen Fasern aus einer Komponente aus Aluminiumoxid und Silica bestehen.

7. Halte- und Dichtungselement nach einem der Ansprüche 1 bis 6, **dadurch gekennzeichnet, dass** das Abgasbehandlungselement ein Katalysatorträger oder ein Abgasfilter ist.

8. Halte- und Dichtungselement nach einem der Ansprüche 1 bis 7, **dadurch gekennzeichnet, dass** das Halte- und Dichtungselement auf wenigstens einen Teil einer äußeren Oberfläche des Abgasbehandlungselements, wobei Öffnungsbereiche ausgenommen sind, gewickelt und so gesichert ist, dass die zweite Oberfläche des Blattelements mit der äußeren Oberfläche des Abgasbehandlungselements in Kontakt steht.

9. Abgasemissionssteuervorrichtung, **gekennzeichnet durch**:
ein Abgasbehandlungselement;
eine Metallhülle, die das Abgasbehandlungselement aufnimmt; und
ein Halte- und Dichtungselement, das auf wenigstens einen Teil einer äußeren Oberfläche des Abgasbehandlungselements, wobei Öffnungsbereiche ausgenommen sind, gewickelt ist;
bei dem das Halte- und Dichtungselement ein aus anorganischem Material gefertigtes Blattelement enthält und eine erste Oberfläche und eine zweite Oberfläche aufweist, wobei die erste und zweite Oberfläche so gewellt sind, dass eine Furchenhöhe der ersten Oberfläche größer als eine Furchenhöhe der zweiten Oberfläche ist; und
wobei das Halte- und Dichtungselement so gewickelt und gesichert ist, dass die zweite Oberfläche des Blattelements mit der äußeren Oberfläche des Abgasbehandlungselements in Kontakt steht.

10. Abgasemissionssteuervorrichtung nach Anspruch 9, **dadurch gekennzeichnet, dass** das Blattelement ein beschichtetes Blatt aus den anorganischen Fasern ist, das einem Nadelungsprozess unterworfen ist.

11. Abgasemissionssteuervorrichtung nach Anspruch 9 oder 10, **dadurch gekennzeichnet, dass** das Blattelement ein Bindematerial enthält.

12. Abgasemissionssteuervorrichtung nach einem der Ansprüche 9 bis 11, **dadurch gekennzeichnet, dass** die Furchenhöhe der ersten Oberfläche 1.2 - 56.7 mal der Furchenhöhe der zweiten Oberfläche ist.

13. Abgasemissionssteuervorrichtung nach einem der Ansprüche 9 bis 12, **dadurch gekennzeichnet, dass** ein mittlerer Durchmesser der anorganischen Fasern 6 µm oder größer ist.

14. Abgasemissionssteuervorrichtung nach einem der Ansprüche 9 bis 13, **dadurch gekennzeichnet, dass** die anorganischen Fasern aus einer Komponente aus Aluminiumoxid und Silica bestehen.

15. Abgasemissionssteuervorrichtung nach einem der Ansprüche 9 bis 14, **dadurch gekennzeichnet, dass** das Abgasbehandlungselement ein Katalysatorträger oder ein Abgasfilter ist.

## Revendications

1. Organe de maintien et d'étanchéité qui maintient un organe de traitement de gaz d'échappement, **caractérisé par**:
un organe en feuille qui est fait en fibres inorganiques et a une première surface et me deuxième surface;
où les première et deuxième surfaces sont ondulées de sorte qu'une hauteur d'ondulation de la première surface soit supérieure à une hauteur d'ondulation de la deuxième surface.

2. Organe de maintien et d'étanchéité comme revendiqué dans la revendication 1, **caractérisé en ce que** l'organe en feuille est une feuille stratifiée des fibres inorganiques qui a été soumise à un procédé d'aiguilletage.

3. Organe de maintien et d'étanchéité comme revendiqué dans la revendication 1 ou la revendication 2, **caractérisé en ce que** l'organe en feuille contient un matériau liant.

4. Organe de maintien et d'étanchéité comme revendiqué dans l'une quelconque des revendications 1 à 3, **caractérisé en ce que** la hauteur d'ondulation de la première surface est de 1,2 - 56,7 fois la hauteur d'ondulation de la deuxième surface.

5. Organe de maintien et d'étanchéité comme revendiqué dans l'une quelconque des revendications 1 à 4, **caractérisé en ce qu'**un diamètre moyen des fibres inorganiques est de 6 µm ou plus.

6. Organe de maintien et d'étanchéité comme revendiqué dans l'une quelconque des revendications 1 à 5, **caractérisé en ce que** les fibres inorganiques sont faites en un compose d'alumine et de silice.

7. Organe de maintien et d'étanchéité comme revendiqué dans l'une quelconque des revendications 1 à 6. **caractérisé en ce que** l'organe de traitement de gaz d'échappement est un support de catalyseur ou un filtre de gaz d'échappement.

8. Organe de maintien et d'étanchéité comme revendiqué dans l'une quelconque dcs revendications 1 à 7, **caractérisé en ce que** l'organe de maintien et d'étanchéité est enroulé sur au moins une partie d'une surface externe de l'organe de traitement de gaz d'échappement à l'exception de régions d'ouvertures et attaché de sorte que la deuxième surface de l'organe en feuille soit en contact avec la surface externe de l'organe de traitement de gaz d'échappement.

9. Dispositif de commande d'émissions d'échappement **caractérisé par**:
un organe de traitement de gaz d'échappement;
une enveloppe métallique qui accueille l'organe de traitement de gaz d'échappement; et
un organe de maintien et d'étanchéité qui est enroulé sur au moins une partie d'une surface externe de l'organe de traitement de gaz d'échappement à l'exception de régions d'ouvertures;
où l'organe de maintien et d'étanchéité inclut un organe en feuille qui est fait en fibres inorganiques et a une première surface et une deuxième surface, la première et la deuxième surfaces étant ondulées de sorte qu'une hauteur d'ondulation de la première surface soit supérieure à une hauteur d'ondulation de la deuxième surface; et
l'organe de maintien et d'étanchéité est enroulé et attaché de sorte que la deuxième surface de l'organe en feuille soit en contact avec la surface externe de l'organe de traitement de gaz d'échappement.

10. Dispositif de commande d'émissions d'échappement comme revendiqué dans la revendication 9, **caractérisé en ce que** l'organe en feuille est une feuille stratifiée des fibres inorganiques qui a été soumise à un procédé d'aiguilletage.

11. Dispositif de commande d'émissions d'échappement comme revendiqué dans la revendication 9 ou la revendication 10, **caractérisé en ce que** l'organe en feuille contient un matériau liant.

12. Dispositif de commande d'émissions d'échappement comme revendiqué dans l'une quelconque des revendications 9 à 11, **caractérisé en ce que** la hauteur d'ondulation de la première surface est de 1,2 - 56,7 fois la hauteur d'ondulation de la deuxième surface.

13. Dispositif de commande d'émissions d'échappement comme revendiqué dans l'une quelconque des revendications 9 à 12, **caractérisé en ce qu'**un diamètre moyen des fibres inorganiques est de 6 µm ou plus.

14. Dispositif de commande d'émissions d'échappement comme revendiqué dans l'une quelconque des revendications 9 à 13, **caractérisé en ce que** les fibres inorganiques sont faites en un composé d'alumine et de silice.

15. Dispositif de commande d'émissions d'échappement comme revendiqué dans l'une quelconque des revendications 9 à 14, **caractérisé en ce que** l'organe de traitement de gaz d'échappement est un support de catalyseur ou un filtre de gaz d'échappement.
